# EUROPEAN PATENT APPLICATION

(11) **EP 1 548 993 A1**
(43) Date of publication of application: **29.06.2005**
(21) Application number: 04029808.5
(22) Date of filing: 15.12.2004
(51) Int. Cl.: H04L 12/46, H04L 12/28

(54) **Method and system for increasing available user VLAN space**

(30) Priority: 23.12.2003 US 745713
(71) Applicant: ALCATEL, 75008 Paris (FR)
(72) Inventor: Bhatia, Jagieet, Simi Valley, California (US)
(74) Representative: Schäfer, Wolfgang, Dipl.-Ing.

(57) **Abstract**

A method and system for conserving VLAN identifier (VID) space in a metropolitan area network (MAN) that transmits data between a plurality of network sites for a plurality of customers, one or more of the customers using tagging to construct a plurality of VLANs. In the preferred embodiment, a first MAN switch marks each customer's untagged traffic with a VLAN identifier conserving (VIC) tag prior to transmitting the traffic through the MAN. The VIC tag, preferably an 802.1Q tag includes a dedicated Ethertype, i.e., a VLAN protocol identifier (VPID), different than the VPID 0x8110 used with the customers' VLAN tagged traffic or with the metro tag used to tunnel the customers' traffic through the MAN. The VIC obviates the need to assign a VID for each customer's untagged traffic that propagates through the MAN, thereby making a plurality of VID available for customers.

## Description

### FIELD OF INVENTION

The invention generally relates to a protocol for increasing the VLAN space available to customers of a metropolitan area network, for example, by specially tagging untagged traffic, i.e. non-VLAN traffic, propagated through the network. In particular, the invention relates to a system and method for employing a unique VLAN identifier conservation (VIC) tag to distinguish each customer's untagged traffic from the traffic of other customers without employing a VLAN identifier from the total VLAN space available for customers.

### BACKGROUND

US patent no. 6,618,388 to Yip et al. discloses a system for distributing data of a metropolitan area network (MAN) that interconnects customers and resources across a geographic area or region. Yip employs a VMAN tag to isolate the traffic of each customer from that of the other customers in the MAN core. In particular, the customer traffic is encapsulated with a VMAN tag in the form of an 802.1Q tag comprising a VLAN protocol identifier (VPID) equal to 8181 and a unique VLAN identifier (VID) assigned to each customer. The VMAN tag is applied when the customer traffic enters the MAN core and then removed upon leaving the MAN core. While the Yip protocol can transport customers' VLAN tagged and untagged traffic, it requires that each of the switches in the path through the MAN core be enabled with this proprietary protocol in order to recognize and process the 8181-tagged frames. There is therefore a need for a new protocol to securely distribute tagged and untagged traffic of customers using existing networks unaware of the YIP tag protocol.

### SUMMARY

The preferred embodiment of the present invention features a method and system for effectively increasing the available VLAN space, i.e. VID value space, in a network adapted to transmit data originating from a plurality of networks, the plurality of networks comprising a first network and a second network, wherein the first network comprises a first untagged domain and a first VLAN domain associated with a first VID space, and the second network comprises a second untagged domain. The method preferably comprises the steps of tagging one or more PDUs from the first untagged domain with a VLAN identifier conservation (VIC) tag comprising a VID associated with the first network, and tagging one or more PDUs from the second untagged domain with a VIC tag comprising a VID associated with the second network. The VIC tag, preferably and 802.1Q tag, includes a novel VPID different than the 0x8100 value conventionally used to identify the presence of a VLAN data. Using the novel VPID, untagged traffic from various sources can be distinguished without the need of a dedicated VIDs selected from the 0x8100-tag VID value space. In this manner, a metropolitan area network (MAN) service provider may transport the untagged traffic of a plurality of customers without removing a VID from the VID space set aside for customers, thereby making more VIDs available for actual VLAN traffic in the customer networks. Both the standard 802.1Q tagged frames and novel VIC-tagged frames may then be encapsulated with a metro tag used to securely tunnel the traffic across the MAN core.

### BRIEF DESCRIPTION OF THE DRAWINGS

The present invention is illustrated by way of example and not limitation in the figures of the accompanying drawings, and in which:
- FIG. 1: is a metro area network with which the metro switching device may be employed, according to the preferred embodiment of the present invention;
- FIG. 2: is a functional block diagram of a metro switching device, according to the preferred embodiment of the present invention;
- FIG. 3: is a flowchart of the process by which a metro switching processes traffic entering the MAN, according to the preferred embodiment of the present invention;
- FIG. 4: is a flowchart of the process by which a metro switch processes traffic received from the MAN core, according to the preferred embodiment of the present invention;
- FIG. 5A: is a diagram of an untagged Ethernet frame;
- FIG. 5B: is a diagram of an Ethernet frame with a generic tag having the structure of an 802.1Q tag;
- FIG. 5C: is a diagram of an Ethernet frame with a metro tag and VIC tag, according to the preferred embodiment of the present invention; and
- FIG. 5D: is a diagram of an Ethernet frame with a metro tag and standard 802.1Q tag, according to the preferred embodiment of the present invention.

### DETAILED DESCRIPTION OF THE PREFERRED EMBODIMENT

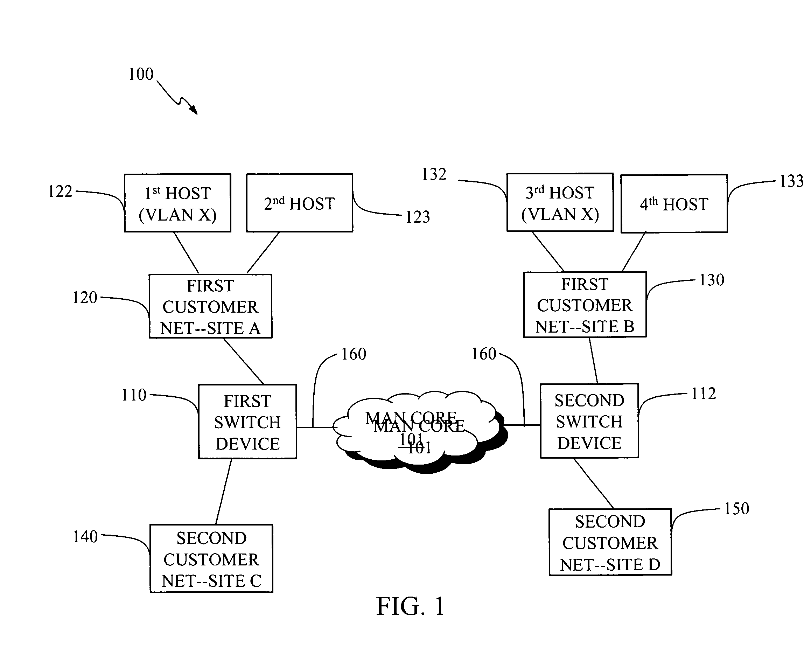

Illustrated in FIG. 1 is a metropolitan area network (MAN) with which the preferred embodiment of the metro labeling protocol may be implemented. The MAN 100 comprises a MAN core 101, a plurality of metro switches 110, 112 at the edge of the MAN core 101, and one or more customer networks 120, 130, 140 and 150, and various end stations 122, 123, 132, 133. The MAN 100 and particularly the MAN core 101 comprise one or more network nodes for switching protocol data units (PDUs) between various customer networks 120, 130, 140, 150 based on layer 2 through layer 7 protocol stacks, as defined by the Open Systems Interconnect (OSI) reference model. The switches in the MAN core 101 may further include one or more packet-switched or circuit switched systems employing, for example, Internet Protocol (IP), asynchronous transfer mode (ATM), frame relay, synchronous optical network (SONET), integrated services data network (ISDN), X.25, Ethernet, Token Ring, or a combination thereof.

The MAN core 101 and metro switches 110, 112 are typically operated by a metro service provider that contracts with various customers by way of service level agreements (SLA) to provide network services including high speed data, long-haul transport and traffic flow aggregation, for example. Each of the customer networks generally include customer-premise equipment (CPE) distributed across one or more customer sites, the various sites of each customer being operatively coupled by means of the MAN 100. A first customer network, for example, comprises a first network site A 120 and a second network site B 130, while a second customer network comprises a first network site C 140 and a second network site D 150. The customer networks generally include one or more local area networks (LANs), but may also include or operatively couple to the Internet, an intranet, another metropolitan area network (MAN), a wide area network (WAN), or a combination thereof.

The customer networks comprise various network devices including, for example, one or more bridges, switches, and routers that operatively couple various local end stations. In the preferred embodiment, one or more of the network devices are VLAN-aware device, preferably enabled with a VLAN tagging protocol such as Institute of Electrical and Electronic Engineers (IEEE) 802.1Q standard. These VLANs may be localized within a single customer network site or span across multiple customer network sites. In the first customer network, for example, the first customer network at site A 120 includes a first host 122 in a VLAN-aware domain, namely VLAN-X. A separate site of the same customer, first customer network at site B 130, includes a third host 132 also in VLAN-X. The service provider must therefore securely transmit VLAN-X traffic between site A 120 and site B 130 while limiting distribution to the appropriate VLAN member set. In addition to VLAN traffic, the MAN 100 must also distribute untagged, i.e. no-VLAN, traffic between various customer network sites including, for example, a second host 123 in a VLAN-unaware domain at site A 120 and a fourth host 133 in another VLAN-unaware domain at site B 130.

Tunneling is generally employed to distribute VLAN traffic and untagged traffic between various sites in the customer network in a manner that is transparent to the customer. To tunnel traffic through the MAN 100, the service provider uses one or more markers, preferably labels or tags appended to the protocol data units (PDUs) in transit between the various sites of a customer. A tag used in the MAN core 101, referred to herein as a metro label, is generally inserted into the PDU at the point of ingress into the MAN core 101, e.g. metro switch 110, and the metro label removed at the point of egress, e.g. metro switch 112. Inside the MAN core 101, the metro label of an ingress PDU is inspected upon receipt at a switch, the next hop identified based in the metro label, and the PDU retransmitted from the appropriate egress port. Switching on a label is generally faster and more efficient than performing OSI layer 3 routing logic.

The service provider's metro label is separate from the VLAN tag used by a customer in the associated customer network. The customer VLAN tag (CT) is generally appended to VLAN traffic in the customer network using an identifier selected from a particular VLAN space comprising a set of VLAN identifier (VID) values. To differentiate the traffic of the various customers, the service provider generally assigns each customer a set of one or more unique VID values. In the case of a 802.1Q tag, the VLAN space is selected from the 4094 VIDs available for use. In addition to differentiating traffic within a customer's network, the customer's VLAN tag also servers to differentiate its VLAN traffic from the VLAN traffic of every other customer of the service provider within the MAN core 101.

While the VID assignments effectively distinguish customer VLAN traffic, another mechanism is needed to differentiate the various customers' untagged traffic in the MAN core 101. In some contemporary approaches, the service provider appends the customer's untagged traffic with a VLAN tag where the customer tag might otherwise be. The VID value for this tag is generally selected from the VLAN space set aside for the particular customer. This selection approach presents at least two challenges. In particular, the customer network may have an existing VLAN addressing scheme in which the VID is already assigned. Even if the VID in available within the customer's network, assigning a VID for each customer's untagged traffic effectively reduces the available address space and therefore reduces the number of customers that may be support by the service provider. As explained in greater detail below, the present embodiment of the invention introduces a new VLAN tag type specifically for untagged traffic, thereby enabling the metro service provider to be effectively transparent to all customers with untagged traffic.

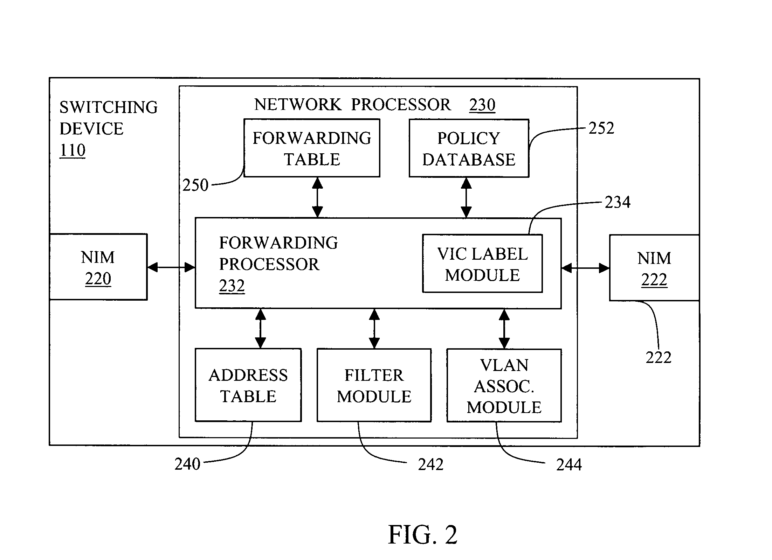

Illustrated in FIG. 2 is a functional block diagram of a representative metro switching device with which the invention may be implemented. The switching device 110 may be one of a plurality of metro switches operably coupled to the MAN core 101 via shared communications links 160 and operably coupled to a plurality of customer networks. The switching device 110 of the preferred embodiment comprises one or more network processors 230 and a plurality of network interface modules (NIMs) 220, 222. Each of the NIMs 220, 222 includes at least one external port operatively coupled to a communications link for purposes of receiving ingress data traffic and transmitting egress data traffic. The metro switch 110 is generally capable of, but not limited to, layer 2 through layer 7 switching operations as defined in the Open Systems Interconnect (OSI) reference model. The metro switch 110 is a VLAN tag-aware switch, preferably enabled with the IEEE 802.1Q standard operating in conjunction a transmission control protocol (TCP)/IP or user datagram protocol (UDP)/IP protocol suite.

The network processor 230 preferably comprises a forwarding processor 232, an data link layer address table 240, a filter module 242, a VLAN association module 244, a network layer forwarding table 250, and a policy database 252. Upon receipt of a PDU, the forwarding processor 232 inspects the PDU for address information to determine how to process the PDU. In the case of a unicast frame, for example, the forwarding processor 232 searches for the destination address of frame in the address table 240 to determine the port to which that address maps. The forwarding processor 232 may also consult the filter module 242 to determine if the VLAN tag information of an incoming frame is properly associated with the inbound port. If the incoming frame is not in the VLAN member set associated with the port, the frame is filtered. Similarly, the filter module 242 may also filter outgoing frames prior to transmission from the egress ports if those frames are not a member set of the VLAN associated with the outgoing frame.

In the case of routing operations, the forwarding processor 232 is adapted to de-encapsulate ingress PDUs, inspect the addressing information contained therein, determine the next-hop based on a search of the forwarding table 250, and generate a new data link layer header. The Quality of Service (QoS) and or Class of Service (CoS) applied to the new frame is generally determined from the policy database 252 for purposes of buffering and scheduling the PDU for transmission out via the egress port or into a switch fabric (not shown).

In addition to regulating the distribution of VLAN traffic to the proper ports, the VLAN association module 244 also supports VLAN tagging operations in the switching device 110. The VLAN associate module 244 enables the switching device 110 to recognize a PDU received from a customer network, determine if the PDU is to be transmitted through the MAN core 101, and provide one or more tags to securely tunnel through the MAN core 101. The VLAN associations rules embodied in module 244 may be based on the ingress or egress port number, the source or destination media access control (MAC) address, the customer VLAN tag, or a combination thereof.

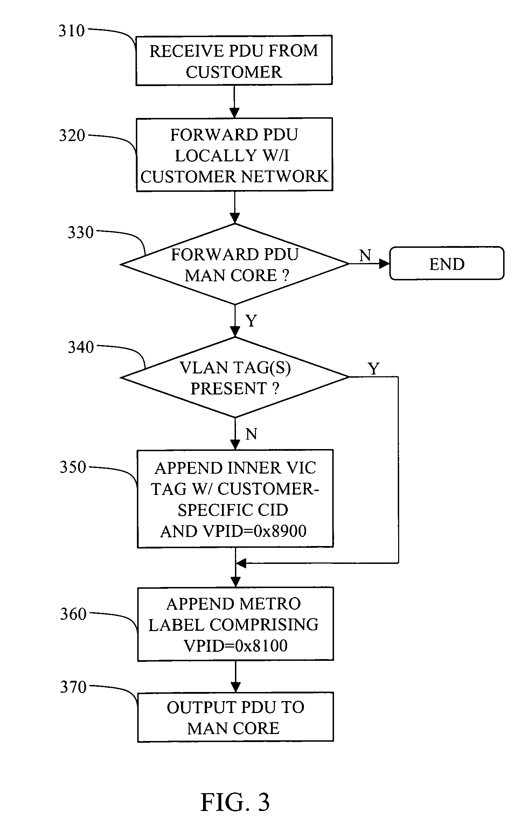

Illustrated in FIG. 3 is a flowchart of the process by which a metro switching processes traffic entering the MAN. Upon receipt of a PDU from the customer network (step 310), the metro switch, e.g.; first switching device 110, determines where the PDU is to be transmitted. If the first customer network is operatively coupled to a plurality of ports at the first switching device 110, the PDU may be transmitted locally (step 320) to one or more end nodes that are reachable through the switching device 110. The nodes may be reached by switching the PDU to nodes identified in the address table 240 or routing the PDU to nodes identified in the forwarding table 250. If the PDU is destined for another site in the customer network reachable through the MAN core 101, the MAN core testing step 330 is answered in the affirmative and the tag state of the PDU determined.

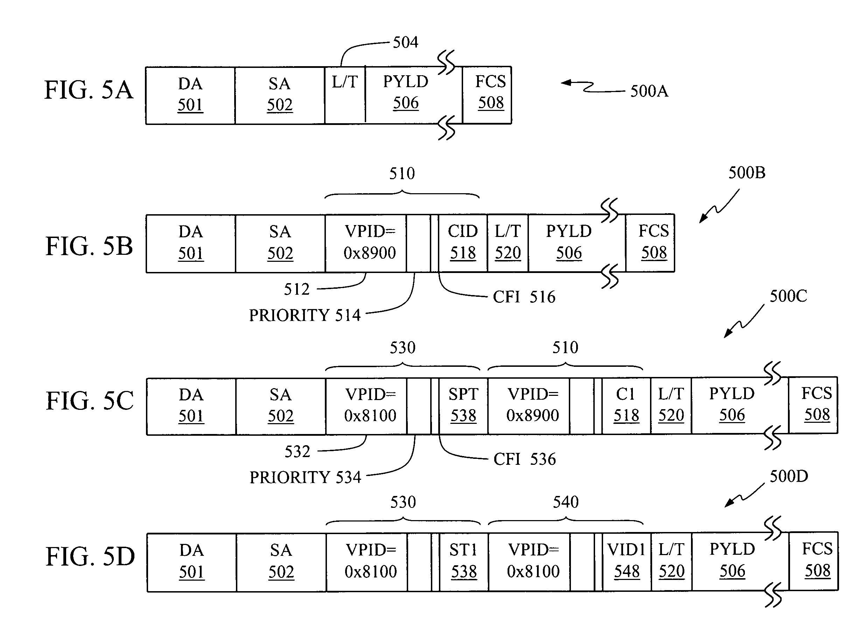

If the PDU already possesses one or more VLAN tags, the CT testing (step 340) is answered in the affirmative. The PDU generally includes a VLAN tag if, for example, the frame originated from a first host 122 in a VLAN tagged domain. The PDU in the preferred embodiment is an Ethernet frame and the VLAN tag is an 802.1Q tag with a VID defined by the customer. If the PDU received from the particular customer is untagged, CT testing step 340 is answered in the negative and a VLAN identifier conservation (VIC) tag inserted (step 350) in the untagged frame by the VIC label module 234 in the forwarding processor 232 of the first switching device 110. Using the VLAN association rules defined by the service provider and maintained in the VLAN association module 244, the first switching device 110 constructs the VIC tag comprising a unique VPID different than the standard 0x8100, preferably a VPID of 0x8900 or comparable value. The VIC tag may further comprise a VID in the form of a customer identifier (CID) that uniquely identifies the particular customer from the other service provider customers. An Ethernet frame with a VIC tag produced in VIC tagging (step 330) is preferably consistent with the frame 500B of FIG. 5B discussed below.

In the preferred embodiment, generally all traffic transmitted to the MAN core 101 by the service provider also includes a metro label, independent of whether the PDU possesses a VLAN tag or VIC tag. The outer metro label appended to the PDU (step 360) in the form of an 802.1Q tag preferably includes a VPID equal to 0x8100 and a VID signifying that the traffic is that of the service provider. When transmitted into the MAN core 101 (step 370), an Ethernet frame corresponding to the previously-untagged traffic is represented by the VIC-tagged frame 500C of FIG. 5C while the customer traffic with the customer's VLAN tag is represented by the VLAN-tagged frame 500D of FIG. 5D. One skilled in the art will recognize that the order in which a tunnel tag is inserted into a PDU relative to either a VLAN tag or a VIC tag is immaterial so long as the relative placement of the tags is preserved.

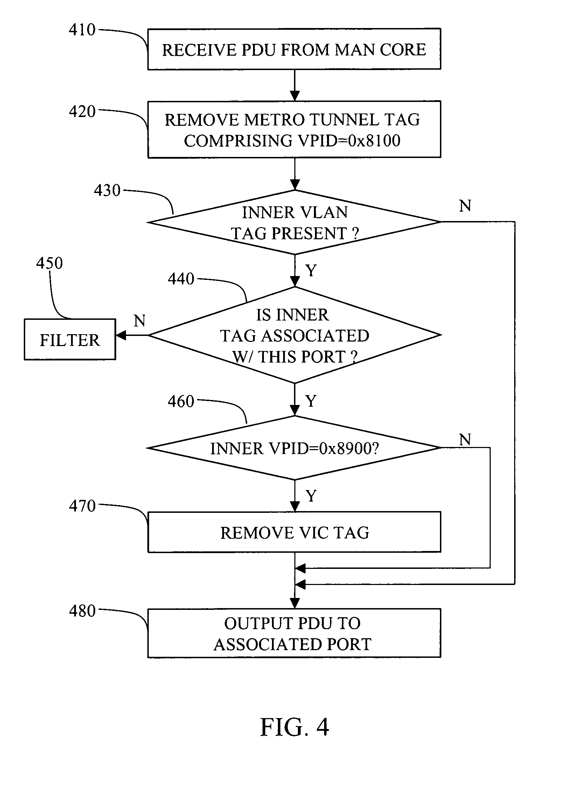

Illustrated in FIG. 4 is a flowchart of the process by which a metro switch processes traffic received from the MAN core. The metro switch that receives traffic from the MAN core, e.g. second switching device 112 in the preferred embodiment, is substantially similar to the first switching device 110. Upon receipt of a PDU from the MAN core 101 (step 410), the second switching device 112 removes (step 420) the outer metro label used to tunnel through the MAN core 101. The second switching device 112 also determines, in the inner tag testing (step 430), whether the PDU possesses a tag in the form of a VLAN tag or a VIC tag. If an inner tag is present, the switching device 112 consults the VLAN association module 242 to determine (step 440) from the customer VLAN tag or the CID of the VIC tag which port(s) are to receive the PDU. The filter module 242, e.g. an egress filter, causes the PDU to be discarded (step 450) at those ports not associated with the associated VLAN or associated untagged domain. If the port is included in the VLAN member set, however, the port association testing (step 440) is answered in the affirmative and the second switching device 112 determines the character of the inner tag. If the inner tag is a VIC tag, the VPID testing (step 460) is answered in the affirmative and the switching device 112 removes the VIC tag (step 470) and forwards (step 480) the untagged frame to the untagged domain reachable through the associated port. If the inner tag is a customer VLAN tag, the VPID testing (step 460) is answered in the negative and the PDU forwarded (step 480) to the appropriate VLAN domain with the VLAN tag intact.

Illustrated in FIG. 5A-5D is a plurality of PDUs at various stages of processing in accordance with the preferred embodiment. Illustrated in FIG. 5A, in particular, is a diagram of a representative data link layer PDU. The untagged Ethernet frame 500A generally includes a frame header comprising a destination MAC address 501, a source MAC address 502, and a frame type field 504 to indicate the client protocol running on top of the Ethernet including, for example, network layer protocols such as Internet Protocol (IP), IPX, and APPLETALK of Apple Computer, Inc., Cupertino, California. The data carried by the frame is then embedded in the payload field (PYLD) 506 along with the header information of higher layer protocols. At the terminal end of the frame is the frame check sequence (FCS) field 508 used to by the receiving device to detect transmission errors.

Illustrated in FIG. 5B is a diagram of a representative data link layer PDU with a first tag. If the Ethernet frame 500B is generated in a VLAN tagged domain within the customer network, the first tag is a generally a VLAN tag inserted at the source node or other customer network device. If the PDU originates from within an untagged domain in the customer network, however, the Ethernet frame 500B includes a novel tag referred to herein as a VLAN identifier conservation (VIC) tag 510. The VIC tag 510 in the preferred embodiment has the structure and placement of an 802.1Q tag 510, but a novel VLAN protocol identifier (VPID) 512 to distinguish PDU 500B from other VLAN tagged traffic transmitted by the service provider through the MAN core 101. In particular, the modified-802.1Q VIC tag 510 inserted between the source address 502 and the type field 520 comprises a 16-bit VPID 512 having a value reserved by the service provider for purposes of distinguishing each customer's tagged traffic from its untagged traffic. In the preferred embodiment, the VPID 512 has a value of 0x8900, although one skilled in the art will recognize that this value need only be distinguishable from other reserved VPIDs and distinguishable from any other VIC tag VPIDs reserved by other service providers. The term "reserved" as used herein presumes that the IEEE Type Field Registrar or other regulatory body has not assigned the value for a different purpose.

In addition to the VPID 512, the VIC tag 510 may further include a tag control information (TCI) field comprising a 3-bit priority field 514 indicating the user priority of the field, a canonical format indicator (CFI) 516 indicating the bit ordering of the bytes within the frame, and a 12-bit customer identifier (CID) 518 defining the particular customer or traffic flow with which the frame is associated. In the preferred embodiment, the CID takes the place of the VID used in the 802.1Q tag.

One of many advantages of the VIC metro tagging scheme is that it obviates the need to employ a conventional VLAN tag and expend a VLAN identifier (VID) value for each customer's untagged traffic that propagates through the metro core 101. That is, without the VIC tag, the untagged metro traffic of each of the plurality of customers would generally require a conventional 802.1Q tag, having a VPID equal to 0x8100, with a unique VID assigned to the customer but unavailable to customer for use within its customer network. In this manner, the preferred embodiment conserves the VID value of the VLAN space and makes it available to the service provider to customer for actual VLAN traffic.

Illustrated in FIG. 5C is a diagram of representative data link layer PDU with a VIC tag and metro tag used to transit originally-untagged frames through the MAN core 101. In particular, the Ethernet frame 500C comprises an outer metro tag 530 used in combination with an inner VIC-tagged frame 500B during transmission through the MAN core 101. The metro tag 530 is preferably inserted between the source address 502 and the VIC tag 510 by the service provider prior transmitting the PDU into the MAN core 101 where it may propagate across the same trunk links used to carry the traffic of other customers. As those skilled in the art are aware, the metro tag 530 may be used to isolate the service provider's traffic from other traffic in the MAN core 101. In the preferred embodiment, the metro tag 530 has the same structure as a conventional 802.1Q with a VPID equal to 0x8100. The metro tag 530 may further include a TCI field comprising a 3-bit priority field 534, a CFI 536, and a 12-bit VID 538 indicating the particular tunnel, e.g. a first service provider tunnel identifier (SPT) 538. The CID of the VIC tag 510 in this example is that of a first customer (C1) 518. In general, a plurality of customers or a plurality of flows may be assigned a unique identifier.

Illustrated in FIG. 5D is a diagram of representative data link layer PDU with a VLAN tag and tag. The Ethernet frame 500D represents a conventional VLAN-tagged frame into which an outer metro tag 530 is inserted for transmission through the MAN core 101. The VLAN tag is preferably a conventional 802.1Q tag 540 with a VPID equal to 0x8100 and a first VID value, VID1 548, selected from the range of VIDs allocated by the service provider for the use of the particular customer. The metro tag 530 is consistent with that described above for the untagged traffic.

In the preferred embodiment, the term "customer" user herein represents one example of a logical group association of packets. In addition to the packets associated with a particular customer, a logical group association may also refer to some other logical relation including a subgroup within an enterprise such as an engineering department, management, accounting, or legal.

The following method/s and/or method steps, separately or in combination, constitute further advantageous embodiments of the claimed and/or described invention:
- The claimed and/or described method, wherein the metro tag is an outer tag with respect to a VIC tag;
- The claimed and/or described method, in a second MAN switch, wherein the method further comprises the steps of: receiving one or more PDUs with a metro tag and a VIC tag; removing the metro tag and the VIC tag; and transmitting untagged PDUs within the associated customer network;
- A method for preserving a logical group association of packets transmitted over a communication network having multiple logical groups, comprising the steps of: determining a VLAN tag state of a packet; and applying a VLAN tag to the packet in response to the determination, wherein the VLAN tag includes a VLAN protocol identifier reserved for untagged packets;
- The claimed and/or described method, wherein the VLAN tag further includes an identifier of a logical group to which the packet belongs;
- The claimed and/or described method, further comprising the steps of: reviewing the VLAN tag; and forwarding the packet on a port associated with the logical group in response to the review;
- A method for transmitting a plurality of PDUs through a network, wherein the plurality of PDUs comprises a first group of one or more PDUs associated with an untagged domain, the method comprising the steps of: applying to the PDUs of the first group entering the network a first VLAN tag comprising a first VLAN protocol identifier (VPID) reserved for untagged PDUs; and applying to the PDUs of the first group with the first VLAN tag a second VLAN tag comprising a second VPID; wherein the first VPDI and second VPID are different;
- The claimed and/or described method, wherein the plurality of PDUs further comprises a second group of one or more PDUs associated with one or more VLAN domains; and wherein the method further comprises the step of applying to the PDUs of the second group entering the network a third VLAN tag, wherein the first VLAN tag and second VLAN tag are substantially the same;
- The claimed and/or described method, wherein the second VLAN tag is an 802.1Q tag and the second VPID has a value of 0x8100;
- The claimed and/or described method, wherein the method further comprises the step of removing from the PDUs of the first group exiting the network both the first VLAN tag and the second VLAN tag;
- The claimed and/or described method, wherein the network is a metropolitan area network.

Although the description above contains many specifications, these should not be construed as limiting the scope of the invention but as merely providing illustrations of some of the presently preferred embodiments of this invention.

Therefore, the invention has been disclosed by way of example and not limitation, and reference should be made to the following claims to determine the scope of the present invention.

## Claims

1. A method for increasing a user virtual local area network (VLAN) space in a system adapted to transmit protocol data units (PDUs) received from at least a first network and a second network over shared communications links, wherein the first network comprises a first untagged domain and a first VLAN domain associated with a first VLAN identifier (VID) space, and the second network comprises a second untagged domain, the method comprising the steps of:
tagging one or more PDUs from the first untagged domain with a VLAN identifier conservation (VIC) tag comprising a VLAN identifier associated with the first network; and
tagging one or more PDUs from the second untagged domain with a VLAN identifier conservation (VIC) tag comprising a VLAN identifier associated with the second network.

2. The method of claim 1, wherein the VIC tag used for the first untagged domain and the second untagged domain further comprise a VLAN protocol identifier (VPID).

3. The method of claim 2, wherein one or more PDUs from the first VLAN comprises a VLAN tag comprising a VPID and a VID selected from the first VLAN space, and wherein the VPID of the VIC tag is different than the VPID of the VLAN tag.

4. The method of claim 3, wherein the VLAN tag and the VIC tag are 802.1Q tags.

5. The method of claim 4, wherein the VPID of the VLAN tag has a value of 0x8100.

6. The method of claim 5, wherein the PDUs comprising either the VLAN tag or the VIC tag further comprise an outer VLAN tag to tunnel the PDUs over the shared communications links.

7. The method of claim 1, in a first metropolitan area network (MAN) switch, wherein the first network is associated with a first customer network and the second network is associated with a second customer network.

8. The method of claim 7, wherein the VLAN identifier associated with the first customer network is a first customer identifier and the VLAN identifier associated with the second customer network is a second customer identifier.

9. The method of claim 7, wherein the second network comprises a second VLAN domain associated with a second VID space different than the first VID space.

10. The method of claim 9, wherein substantially all the PDUs from the first network and substantially all the PDUs from the second network are further tagged with a metro tag through a MAN.
